(19) Europäisches Patentamt

European Patent Office

Office européen des brevets

(11) Veröffentlichungsnummer: **0 380 053 A2**

(12) **EUROPÄISCHE PATENTANMELDUNG**

(21) Anmeldenummer: **90101302.9**

(22) Anmeldetag: **23.01.90**

(51) Int. Cl.5: **G05D 7/01, F15B 11/05, F03C 1/16**

(30) Priorität: **23.01.89 DE 3901886**

(43) Veröffentlichungstag der Anmeldung:
**01.08.90 Patentblatt 90/31**

(84) Benannte Vertragsstaaten:
**DE FR GB IT**

(71) Anmelder: **PAUL PLEIGER Maschinenfabrik GmbH & Co. KG**
**Postfach 32 63**
**D-5810 Witten 3 (Herbede)(DE)**

(72) Erfinder: **Szewczyk, Matthias, Dr.-Ing.**
**Borgäcker 3**
**D-5810 Witten 7(DE)**

(74) Vertreter: **Klingseisen, Franz, Dipl.-Ing. et al**
**Dr. F. Zumstein Dipl.-Ing. F. Klingseisen**
**Bräuhausstrasse 4**
**D-8000 München 2(DE)**

(54) **Mengenregelventil.**

(57) Bei einem Mengenregelventil mit einer Meßdrossel und mit einem in einer Gehäusebohrung verstellbaren Steuerkolben, der auf einer Seite mit dem Druck vor der Meßdrossel und auf der gegenüberliegenden Seite mit dem Druck hinter der Meßdrossel sowie durch eine Feder beaufschlagt ist, wobei der Steuerkolben als Drosselelement in einen Leitungsquerschnitt vor der Meßdrossel eingreift, wird eine Einrichtung vorgesehen, mittels der am Steuerkolben zusätzlich ein Druck proportional zum Druck ($P_B$) hinter der Meßdrossel zur Veränderung der Druckdifferenz am Steuerkolben anlegbar ist, um bei einfachem und kostengünstigem Aufbau eine von der Belastung unabhängige, konstante Drehzahl auch bei einem hydraulischen Verbraucher, dessen Kennlinie vom anstehenden Druck abhängig ist, zu gewährleisten.

Fig. 2

# Mengenregelventil

Die Erfindung betrifft ein Mengenregelventil nach dem Oberbegriff des Anspruchs 1.

Wird in einem hydraulischen Kreislauf mit einer Druckmittelquelle und einem oder mehreren Verbrauchern von einem Verbraucher, beispielsweise einem Radialkolbenmotor oder einer Kolbenpumpe, unabhängig von der jeweiligen Belastung eine konstante Drehzahl bzw. Kolbengeschwindigkeit verlangt, so werden dafür Mengenregelventile eingesetzt, die eine von außen einstellbare Meßdrossel und eine zweite variable Drosselstelle in Form einer sogenannten Druckwaage aufweisen, wobei die Druckwaage aus einem Steuerkolben besteht, dessen gleiche große Stirnflächen mit dem Druck vor und hinter der Meßdrossel beaufschlagt werden. Da der Druck hinter der Meßdrossel kleiner ist als der vor der Meßdrossel, wird der steuerkolben auf der Seite, die mit dem Druck hinter der Meßdrossel beaufschlagt ist, zusätzlich durch eine Feder beaufschlagt, deren Kraft gleich der am Steuerkolben anliegenden Druckdifferenz ist, damit der Steuerkolben bzw. die Druckwaage im Gleichgewicht gehalten wird. Der Steuerkolben greift in einen Leitungsquerschnitt ein, der mit der zur Meßdrossel führenden Leitung in Verbindung steht. Bei einem 2-Wege-Mengenregelventil wird die Meßdrossel mit der durch den Steuerkolben gebildeten zweiten Drosselstelle in Reihe geschaltet, während bei einem 3-Wege-Mengenregelventil diese beiden Drosselstellen parallel geschaltet werden.

Ein solches, einem hydraulischen Verbraucher vorgeschaltetes Mengenregelventil sorgt dafür, daß dem Verbraucher unabhängig von der anliegenden Druckdifferenz stets die gleiche Durchflußmenge zugeführt wird. Mit anderen Worten hat die Kennlinie eines solchen Mengenregelventils, die die Durchflußmenge über dem Betriebsdruck wiedergibt, einen waagrechten Verlauf.

Wenn der Verbraucher selbst eine Kennlinie hat, die nicht unabhängig vom anstehenden Druck ist, wie dies z.B. bei einem Hydromotor der Fall ist, bei dem mit steigendem Druck die Drehzahl in Folge von Leckverlusten abnimmt, so kann mit dem bekannten Mengenregelventil allein eine von der Belastung unabhängige Drehzahl nicht erreicht werden. Hierfür wäre z.B. ein aufwendiger Regelkreis mit Drehzahlgeber und elektro-hydraulischem Proportionalventil und dgl. erforderlich.

Der Erfindung liegt die Aufgabe zugrunde, ein Mengenregelventil der eingangs angegebenen Art so auszubilden, daß damit bei einfachem und kostengünstigem Aufbau eine von der Belastung unabhängige, konstante Drehzahl auch bei einem hydraulischen Verbraucher gewährleistet werden kann, dessen Kennlinie vom anstehenden Druck abhängig ist.

Diese Aufgabe wird durch die Merkmale im Kennzeichen des Anspruchs 1 gelöst.

Durch zusätzliches Anlegen eines Drucks am Steuerkolben proportional zum Druck hinter der Meßdrossel wird eine hydraulische Korrektur in Form einer Veränderung der Druckdifferenz an der Druckwaage proportional zum Betriebsdruck vorgenommen, die einen wesentlichen Einfluß auf die Neigung bzw. den Verlauf der Kennlinie des Mengenregelventils in der Weise hat, daß mit steigendem Betriebsdruck bzw. Druck hinter der Meßdrossel auch die Durchflußmenge ansteigt. Damit kann, z.B. bei einem Hydromotor, eine von der Belastung unabhängige, konstante Drehzahl gewährleistet werden, wobei die Drehzahl belastungsunabhängig nicht nur konstant, sondern mit steigender Belastung sogar noch steigend gestaltet werden kann. Insgesamt wird dadurch bei einfachem und kostengünstigem Aufbau ein genau arbeitendes Mengenregelventil geschaffen, das einen aufwendigen Regelkreis ersetzt.

Vorteilhafte Ausgestaltungen der Erfindung sind in der nachfolgenden Beschreibung und in den weiteren Ansprüchen angegeben.

Beispielsweise Ausführungsformen der Erfindung werden nachfolgend anhand der Zeichnung näher erläutert. Es zeigen

Fig. 1 in schematischer Darstellung ein bekanntes Mengenregelventil,

Fig. 2 in entsprechender Darstellung eine Ausführungsform nach der Erfindung

Fig. 3 eine abgewandelte Ausführungsform,

Fig. 4 Kennlinien der Druckwaage mit und ohne Korrektur und

Fig. 5 Kennlinien eines Hydromotors mit und ohne Korrektur.

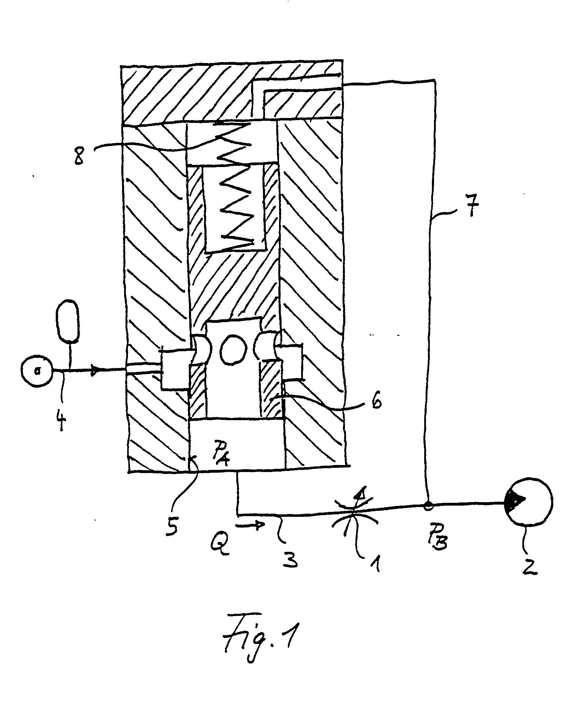

In Fig. 1 ist mit 1 eine einstellbare Meßdrossel bezeichnet, die in einer zu einem hydraulischen Verbraucher 2, beispielsweise einem Hydromotor, führenden Leitung 3 angeordnet ist, die mit einer bei 4 schematisch angedeuteten Druckmittelquelle, die eine beliebige Druckmittelmenge unter beliebigem konstantem Druck liefert, über eine zweite variable Drosselstelle in Verbindung steht, die durch einen in einer Gehäusebohrung 5 verstellbaren Steuerkolben 6 gebildet wird, der in den Leitungsquerschnitt zwischen Druckmittelquelle 4 und Meßdrossel 1 eingreift. Der Steuerkolben 6 hat auf den beiden gegenüberliegenden Stirnseiten die gleiche Fläche, wobei an der unteren Stirnfläche der Druck $P_A$ vor der Meßdrossel 1 und auf der oberen Stirnfläche der Druck $P_B$ hinter der Meßdrossel bzw. der Betriebsdruck des Motors 2 über eine Leitung 7 anliegt. Da der Druck $P_B$ hinter der Meßdrossel kleiner ist als der Druck $P_A$ vor der Meßdrossel, wird die obere Stirnfläche des Steuerkolbens 6 durch eine Druckfeder 8 beaufschlagt, deren Kraft der Druckdifferenz $P_A$ - $P_B$ zwischen den beiden Kolbenseiten entspricht, damit der Steuerkolben 6 im Gleichgewicht gehalten wird.

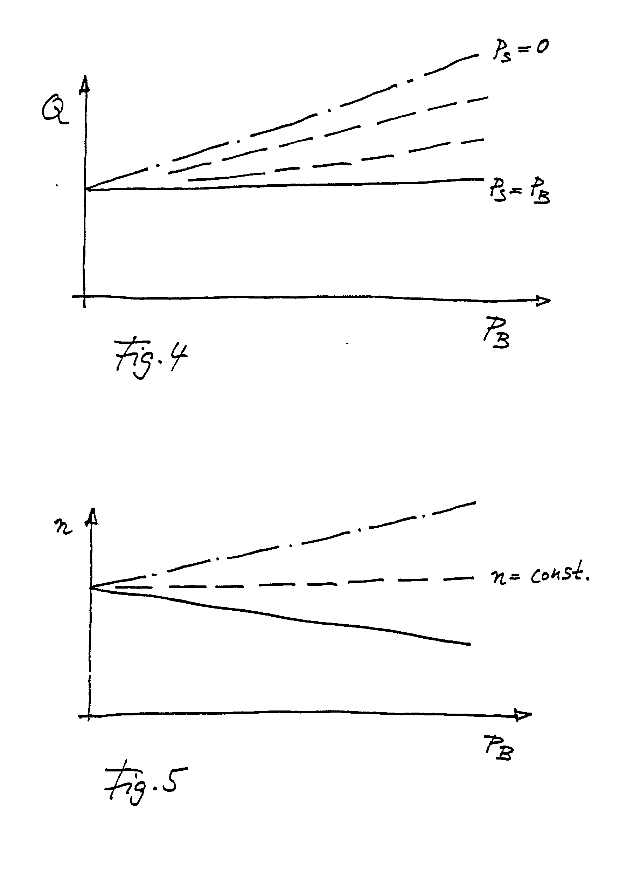

Diese bekannte Bauweise eines Mengenregelventils nach Fig. 1 sorgt für eine konstante Durchflußmenge, unabhängig von der anliegenden Druckdifferenz, wie dies in Fig. 4 durch eine ausgezogene Linie dargestellt ist, wobei die Durchflußmenge Q über dem Betriebsdruck $P_B$ aufgetragen ist, der am Hydromotor anliegt.

Fig. 5 zeigt durch eine ausgezogene Linie die Kennlinie eines Hydromotors, dem ein Mengenregelventil nach Fig. 1 vorgeschaltet ist. Fig. 5 zeigt den Verlauf der Motordrehzahl n über dem Betriebsdruck $P_B$, wobei die Drehzahl mit steigendem Betriebsdruck infolge von Leckverlusten abnimmt. Zwar liefert das Mengenregelventil nach Fig. 1 eine konstante Durchflußmenge Q, jedoch wird am Hydromotor mit steigendem Betriebsdruck nur noch eine kleiner werdende Menge Q wirksam.

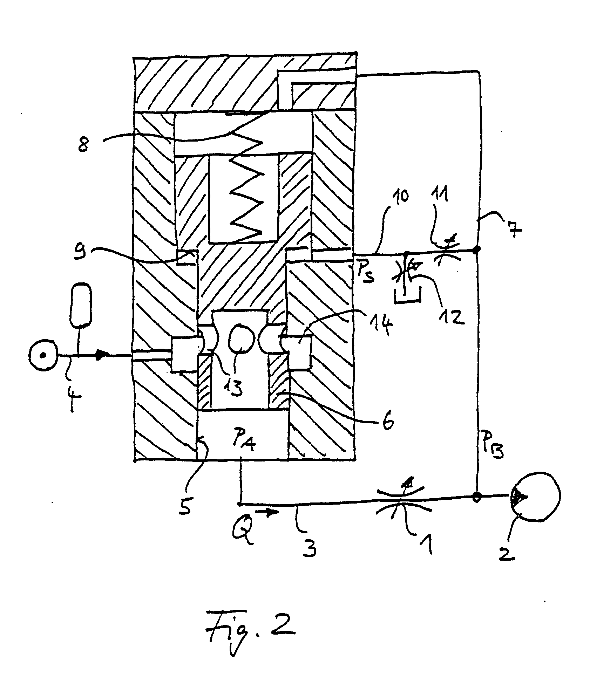

Fig. 2 zeigt eine Ausführungsform eines Mengenregelventils nach der Erfindung, wobei für gleiche bzw. entsprechende Bauteile die gleichen Bezugszeichen wie in Fig. 1 verwendet sind. Der Steuerkolben 6 ist als Stufenkolben ausgebildet, wobei die Stufenfläche 9 der oberen Stirnfläche des Kolbens bzw. der Druckfeder 8 entgegengerichtet ist und über eine von der Leitung 7 abzweigende Leitung 10 mit dem Betriebsdruck $P_B$ beaufschlagt werden kann. In der Leitung 10 ist eine einstellbare Drossel 11 und in einer von der Leitung 10 abzweigenden Leitung eine mit der Umgebung bzw. dem Rücklauf in Verbindung stehende einstellbare Drossel 12 vorgesehen, mittels denen der Betriebsdruck $P_B$ auf einen an der Stufenfläche 9 anliegenden Druck $P_S$ eingestellt werden kann, der zwischen Null und dem Wert von $P_B$ liegt.

Wird die Drossel 12 geschlossen und die Drossel 11 voll geöffnet, so ist $P_S$ = $P_B$. Bei dieser Einstellung erfolgt keine Korrektur und das Mengenregelventil verhält sich wie das in Fig. 1 dargestellte herkömmliche Mengenregelventil. Wird dagegen die Drossel 11 vollständig geschlossen und die Drossel 12 geöffnet, so ist $P_S$ = 0. In diesem Falle erfolgt eine maximale Korrektur der Kennlinie des Mengenregelventils, wie dies in Fig. 4 durch eine strichpunktierte Linie dargestellt ist, wonach mit steigendem Betriebsdruck $P_B$ die Durchflußmenge Q linear ansteigt. Dies ist darauf zurückzuführen, daß die Druckfeder 8, deren Kraft gleich dem Produkt aus Druckdifferenz an der Meßdrossel 1 und Fläche der unteren bzw. kleineren Stirnseite des Steuerkolbens 6 ausgelegt ist, durch den auf die Stufenfläche 9 wirkenden Betriebsdruck $P_B$ unterstützt wird, wobei der an der unteren bzw. kleiner Stirnseite des steuerkolbens angreifende Druck vor der Meßdrossel 1 mehr und mehr überwunden wird. Je nach Einstellung des steuerdrucks $P_S$ können unterschiedlich geneigte Kennlinien zwischen maximaler Korrektur bei $P_S$ = 0 und ohne Korrektur bei $P_S$ = $P_B$ durch die Drosseln 11, 12 eingestellt werden, wie dies in Fig. 4 durch gestrichelte Linien angedeutet ist.

Durch die Korrektur der Kennlinie des Mengenregelventils nach Fig. 4 ergibt sich eine entsprechende Korrektur der Kennlinie des Hydromotors. Eine konstante Drehzahl des Hydromotors erhält man beispielsweise dann, wenn $P_S$ = 1/2 $P_B$, während eine über dem Betriebsdruck $P_B$ steigende Drehzahl n bei maximaler Korrektur der Kennlinie des Mengenregelventils bzw. $P_S$ = 0 erreicht wird. Entsprechend der stufenlosen Einstellung von $P_S$ können beliebige Kennlinien zwischen den beiden Grenzwerten $P_S$ = $P_B$ und $P_S$ = 0 erhalten werden.

Fig. 2 gibt ein 2-Wege-Mengenregelventil wieder, bei dem die Meßdrossel 1 und die durch den Steuerkolben 6 gebildete zweite Drossel in Reihe geschaltet sind. Der Steuerkolben greift in den Leitungsquerschnitt zwischen Druckmittelquelle 4 und Meßdrossel 1 in der Weise ein, daß dann, wenn $P_S$ = 0, der Leitungsquerschnitt bzw. die Drossel voll offen ist. In diesem Falle liegen die radialen Bohrungen 13 im hohlzylindrisch ausgebildeten unteren Abschnitt des Steuerkolbens 6 im Bereich der Ringnut 14.

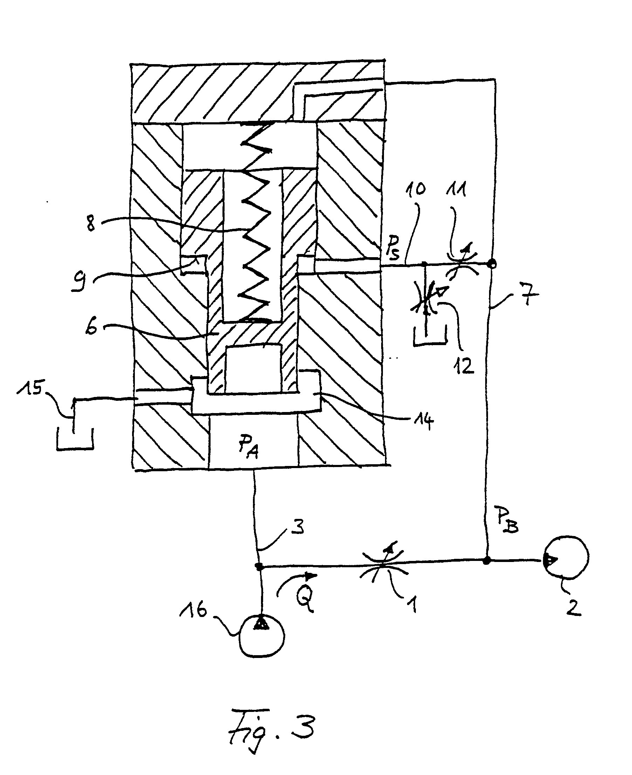

Fig. 3 zeigt eine Ausführungsform des Mengenregelventils nach der Erfindung in Form eines 3-Wege-Mengenregelventils, wobei für gleiche bzw. entsprechende Bauteile die gleichen Bezugszeichen verwendet sind. Anstelle der Druckmittelquelle 4 in Fig. 2 ist eine Verbindung 15 zur Umgebung bzw. zum Rücklauf vorgesehen, während an die Leitung 3 zwischen Steuerkolben und Meßdrossel 1 eine als Pumpe 16 angedeutete Druckmittelquelle angeschlossen ist. Der untere Endabschnitt des Steuerkolbens 6 greift in den durch die Ringnut 14 ausgebildeten Leitungsquerschnitt ein, wobei keine Korrektur erfolgt und das Mengenregelventil wie ein herkömmliches nach Fig. 1 arbeitet, wenn $P_S$ = $P_B$, während eine maximale Korrektur erfolgt, wenn $P_S$ = 0, wobei der Querschnitt der Ringnut 14 mit steigendem Betriebsdruck $P_B$ durch den Steuerkolben 6 fortschreitend geschlossen und die von der Pumpe 16 gelieferte Druckmittelmenge Q verstärkt zum Motor 2 geleitet wird.

Auch bei dieser Bauweise eines 3-Wege-Mengenregelventils kann jede degressive Kennlinie eines Hydromotors so korrigiert werden, daß die Drehzahl konstant gehalten werden kann, ohne daß ständig die Druckwaage eines herkömmlichen Mengenregelventils über die einstellbare Meßdrossel 1 korrigiert oder ein aufwendiger Regelkreis vorgesehen werden muß.

Die der Kraft der Feder 8 entgegenwirkende, ringförmige Stufenfläche 9 kann im Verhältnis zu den Stirnflächen des Steuerkolbens sehr klein ausgebildet werden. Ihre radiale Abmessung kann wenige 1/10 mm betragen. Dies hängt damit zusammen, daß die Druckwaage durch die Feder 8 und die hydraulische Zusatzkraft des Drucks $P_S$ an der Stufenfläche 9 gegen die Druckdifferenz $P_A$ - $P_B$ an den gegenüberliegenden Stirnflächen des Steuerkolbens im Gleichgewicht gehalten werden muß. Die für die Korrektur vorgesehene hydraulische Zusatzkraft an der Stufenfläche 9 muß in einem vernünftigen Verhältnis zur Kraft der Feder 8 stehen, die wiederum durch den zur Verfügung stehenden Einbaubaum begrenzt ist. Dies wird an einem Beispiel deutlich. Bei einer Druckdiffernz $P_A$ - $P_B$ = 10 bar zwischen den Stirnseiten des Steuerkolbens und einer einem Hydromotor zugeführen Druckmittelmenge Q von 90 dm³/min ergibt ein um 3/10 mm größerer Durchmesser an der Kolbenabstufung gegenüber dem Druchmesser der unteren Stirnfläche bei einem Druck von 100 bar einen Durchfluß Q von 110 dm³/min bei maximaler Korrektur ($P_S$ = 0). Dies bedeutet eine Erhöhung um fast 20% und reicht in jedem Falle aus, um bei jedem Hydromotor die entstehenden Leckverluste auszugleichen und ihn unabhängig von der Belastung mit konstanter Drehzahl fahren zu können.

Die beiden Drosseln 11 und 12 werden zweckmäßigerweise in einer Baueinheit zusammengefaßt, wobei ein einzelner Kolben die beiden Drosselöffnungen steuert. Ein derartiges Vorsteuerventil kann von Hand eingestellt oder auch durch einen Magneten betätigt werden. Die wesentlichen Bauteile eines solchen Vorsteuerventils können in einem Deckel oder im Gehäuse eines Mengenregelventils mit entsprechenden Leitungsbohrungen untergebracht werden.

## Ansprüche

1. Mengenregelventil mit einer Meßdrossel und mit einem in einer Gehäusebohrung verstellbaren Steuerkolben, der auf einer Seite mit dem Druck vor der Meßdrossel und auf der gegenüberliegenden Seite mit dem Druck hinter der Meßdrossel sowie durch eine Feder beaufschlagt ist, wobei der Steuerkolben als Drosselelement in einen Leitungsquerschnitt vor der Meßdrossel eingreift,
**dadurch gekennzeichnet,**
daß eine Einrichtung (9,11,12) vorgesehen ist, mittels der am Steuerkolben (6) zusätzlich ein Druck proportional zum Druck ($P_B$) hinter der Meßdrossel (1) zur Veränderung der Druckdifferenz am Steuerkolben anlegbar ist.

2. Mengenregelventil nach Anspruch 1,

**dadurch gekennzeichnet,**
daß der Steuerkolben (6) als Stufenkolben ausgebildet ist, dessen Stufenfläche (9) der Kraft der Feder (8) entgegengerichtet und über eine Drossel (11,12) durch den Druck ($P_B$) hinter der Meßdrossel (1) beaufschlagbar ist.

3. Mengenregelventil nach Anspruch 1,
**dadurch gekennzeichnet,**
daß die Stufenfläche (9) eine radiale Erstreckung im Bereich von Zehntelmillimeter aufweist.

4. Mengenregelventil nach Anspruch 1,
**dadurch gekennzeichnet,**
daß die Drossel zur Beaufschlagung der Stufenfläche (9) eine einstellbare Drossel (11) in der Verbindungsleitung (10) sowie eine mit dem Umgebungsdruck in Verbindung stehende Drossel (12) umfaßt.

5. Mengenregelventil nach Anspruch 4,
**dadurch gekennzeichnet,**
daß die beiden Drosseln (11,12) zu einer Baueinheit zusammengefaßt sind, wobei ein Kolben die beiden Drosselöffnungen steuert.

Fig. 1

Fig. 2

*Fig. 3*

Fig.4

Fig.5